(19) Europäisches Patentamt
European Patent Office
Office européen des brevets

(11) **EP 2 584 326 B1**

(12) **FASCICULE DE BREVET EUROPEEN**

(45) Date de publication et mention
de la délivrance du brevet:
**04.12.2013 Bulletin 2013/49**

(51) Int Cl.:
*G01H 3/12* *(2006.01)*       *H04R 1/40* *(2006.01)*
*H04R 3/00* *(2006.01)*       *H04R 5/027* *(2006.01)*

(21) Numéro de dépôt: **12189452.1**

(22) Date de dépôt: **22.10.2012**

(54) **Antenne destinée à porter un réseau de transducteurs et procédé de montage d'une telle antenne**

Antenne, die zum Tragen eines Wandlernetzwerks dient, und Montageverfahren einer solchen Antenne

Antenna for supporting an array of transducers and method for mounting such an antenna

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.10.2011 FR 1159488**

(43) Date de publication de la demande:
**24.04.2013 Bulletin 2013/17**

(73) Titulaire: **Dyva**
**69008 Lyon (FR)**

(72) Inventeurs:
• **Bollade, Laurent**
**69008 Lyon (FR)**
• **Chassaignon, Christian**
**60270 Gouvieux (FR)**

(74) Mandataire: **Cabinet Plasseraud**
**235 Cours Lafayette**
**69006 Lyon (FR)**

(56) Documents cités:
EP-A2- 1 983 316        WO-A1-03/079486
WO-A1-2011/069964        DE-A1-102008 026 657
DE-U1-202008 002 958        US-B1- 6 583 768

## Description

## DOMAINE DE L'INVENTION

La présente invention se rapporte à une antenne destinée à porter un réseau de transducteurs et un procédé de montage d'une telle antenne.

L'invention se rapporte, en particulier, aux antennes destinées à porter un réseau de microphones, utilisées en imagerie acoustique.

## ETAT DE LA TECHNIQUE

L'imagerie acoustique regroupe des techniques qui permettent de localiser et caractériser une source sonore en fournissant une image des niveaux acoustiques rencontrés à la surface d'un objet étudié.

L'imagerie acoustique est notamment utilisée pour l'évaluation du bruit, dans diverses applications industrielles, environnementales, ou en recherche et développement, à des fins telles que la conception de produits et de machines silencieux, ou la réduction des nuisances sonores dans un environnement donné.

Elle est en particulier utilisée dans le cadre de mesures acoustiques pour la réduction du bruit, afin d'établir des diagnostics précis permettant d'identifier et de hiérarchiser des sources sonores. Cette technique récente constitue une alternative aux méthodes expérimentales classiques de mesure du bruit, qu'elle dépasse en termes de précision de diagnostic.

Les systèmes d'imagerie acoustique comprennent généralement une antenne dotée d'un réseau de microphones permettant la mesure du son, un dispositif d'analyse et de traitement de la mesure, et un système de visualisation des résultats.

Afin de procéder à des mesures de bruit sur des machines de grande taille, ou pour des applications nécessitant la couverture d'un large périmètre, telle que la mesure de bruit liée au passage d'un véhicule, il est nécessaire d'utiliser des antennes de grande envergure.

Les antennes de grande envergure sont également utiles lorsqu'il s'agit de localiser et caractériser, de manière précise, les sources basses fréquences. En effet, la longueur d'onde est directement proportionnelle à la résolution de l'antenne, c'est-à-dire à la capacité à localiser au mieux les sources sonores dans l'espace, qui elle-même dépend de la taille de l'antenne et de la densité de microphones. Ainsi, plus l'antenne est grande et comporte un nombre important de microphones, plus la résolution de celle-ci est élevée, ce qui permet de travailler sur des grandes longueurs d'onde, soit des basses fréquences. Dans le domaine de l'imagerie acoustique, la gamme de fréquences couverte correspond généralement au domaine des fréquences audibles par l'homme. La gamme de fréquences couverte est ainsi d'environ 20 Hz à 20 kHz, les basses fréquences détectées correspondant à la fourchette basse de cette gamme, soit de l'ordre de quelques dizaines de Hertz à quelques centaines de Hertz.

Par « antenne de grande envergure », on entend une antenne dont les dimensions maximales, en position de fonctionnement, sont au moins de l'ordre de plusieurs mètres, en particulier égales ou supérieures à environ 5 mètres, à 10% près.

On connait de l'art antérieur des antennes de grande envergure utilisées dans le cadre de mesures du bruit en extérieur, visant à localiser et caractériser des sources sonores fixes ou mobiles dans l'espace. Cependant, l'offre du marché pour ce type d'antennes est très limitée.

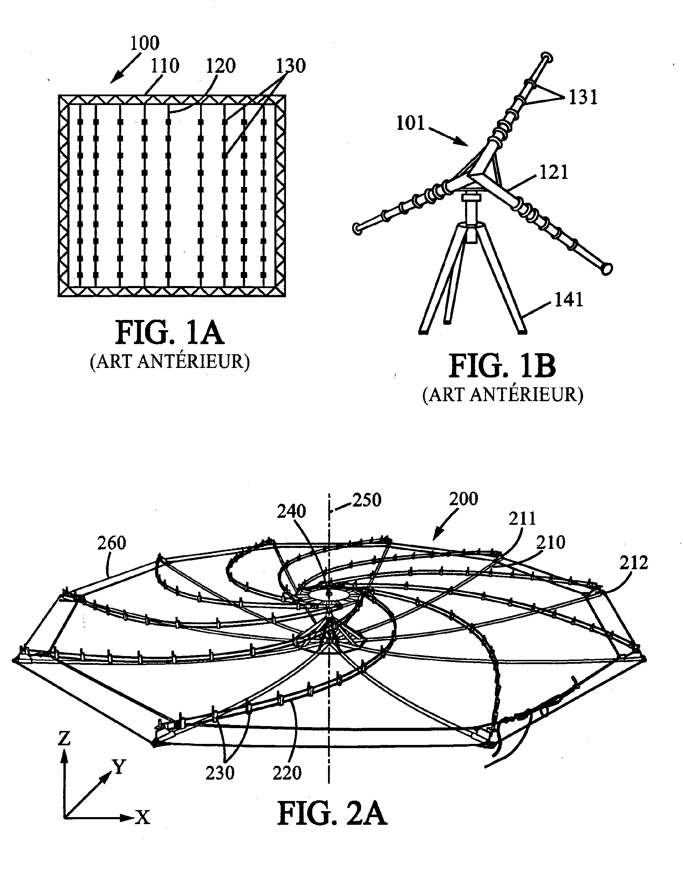

La figure 1A représente schématiquement une antenne utilisée par la société ACB, destinée à la mesure du bruit par imagerie acoustique en extérieur. L'antenne 100 est composée d'un cadre métallique carré 110 présentant une structure en treillis, sur lequel sont fixées des guirlandes munies de microphones 130. Ces guirlandes microphoniques sont chacune constituée par un câble 120, fixé entre deux points opposés des côtés du cadre 110, et sur lequel sont positionnés des microphones 130 espacés, de manière à constituer un réseau. L'antenne 100 est de grande envergure. Son cadre 110 présente en effet un côté de 12 mètres, et comporte 121 microphones (tous les microphones ne sont pas représentés).

Un inconvénient majeur de ce type d'antenne de grande envergure réside dans la difficulté de transport et de mise en oeuvre sur le terrain. Le montage de l'antenne est en général long et nécessite l'intervention d'au moins deux opérateurs. En outre la manipulation de l'antenne, une fois montée, est délicate. Dans le cas de l'antenne 100, un moyen de levage est, par exemple, nécessaire pour mettre l'antenne dans sa position de fonctionnement.

On connait par ailleurs des antennes facilement transportables, qui peuvent être mise en oeuvre rapidement sur le terrain, telle que l'antenne 101 représentée à la figure 1B. L'antenne 101 fait partie d'un système d'imagerie acoustique commercialisé par la société Acoustic Camera. Elle comprend 36 à 48 microphones 131 répartis sur les trois branches 121 d'un tripode. Le tripode est une structure pliable/dépliable, où les trois branches, espacées régulièrement, peuvent s'ouvrir et se fermer autour de l'axe central du tripode. En position de fonctionnement, l'antenne est disposée sur un trépied, et les trois branches 121 sont dépliées de manière à former un réseau de microphones en étoile, où tous les microphones ne figurent pas dans un même plan.

Un inconvénient d'une telle antenne est qu'elle ne permet pas d'avoir une densité élevée de microphones, ce qui limite d'autant sa résolution et ses performances.

Une antenne transportable est connue de DE 20 2008 002 958 U1.

Il est ainsi hautement désirable, pour de nombreuses applications, notamment en imagerie acoustique, de fournir une antenne de grande envergure, facilement transportable, pouvant être aisément et rapidement déployée, et présentant une résolution élevée.

## RESUME DE L'INVENTION

C'est un des objectifs de l'invention que de résoudre, au moins partiellement, les problèmes mentionnés plus haut. L'invention vise également à remplir au moins l'un des objectifs suivants, pris seuls ou en combinaison.

Un objectif de l'invention consiste à fournir une antenne destinée à porter un réseau de transducteurs, de grande envergure, légère et facilement transportable, et dont le déploiement est rapide, sûr et efficace, afin de réduire le temps et le nombre de personnes nécessaires à l'installation.

Un autre objectif de l'invention est de proposer un procédé de montage d'une telle antenne, qui soit rapide et réalisable par un nombre restreint de personnes, de préférence par au plus deux personnes, et de préférence par une seule personne.

Un autre objectif de l'invention consiste à fournir une antenne pour l'imagerie acoustique, permettant la réalisation d'images acoustiques présentant une résolution spatiale améliorée et une utilisation dans un large intervalle fréquentiel (géométrie répartition microphones, taille de l'antenne et densité des microphones). En particulier, l'antenne selon l'invention permet de détecter des sons dont la gamme de fréquence est d'environ 20 Hz à 20 kHz, de préférence d'environ 100 Hz à 10 000 Hz, et encore plus préférentiellement d'environ 300 Hz à 6000 Hz.

Un autre objectif de l'invention est de proposer une antenne destinée à porter un réseau de transducteurs, qui présente une rigidité telle qu'une fois montée, elle ne se déforme pas ou peu, quelle que soit sa position dans l'espace, afin d'assurer une position sensiblement fixe des transducteurs.

Un autre objectif de l'invention est de proposer une antenne destinée à porter un réseau de transducteurs, dont la fabrication et la maintenance soient économiques.

Un autre objectif de l'invention consiste à fournir une antenne destinée à porter un réseau de transducteurs, qui soit résistante aux contraintes liées à l'environnement extérieur dans lequel elle est amenée à fonctionner, notamment à l'exposition au soleil, au vent et aux précipitations.

Pour atteindre ces objectifs, la présente invention propose une antenne destinée à porter un réseau de transducteurs, comprenant :

- un axe définissant le centre de l'antenne,
- des tiges d'armature disposées en étoile autour d'un élément central axial ;
- des moyens de maintien en tension reliant les extrémités libres des tiges d'armature à la périphérie de l'antenne, de manière à cintrer les tiges dans la direction de l'axe de l'élément central axial pour former une armature en forme générale de coupole ;
- des supports de transducteurs, disposés autour de l'élément central axial, dans un plan orthogonal à l'axe de l'élément central, les supports étant de préférence sous contrainte,

l'ensemble des tiges d'armature, des moyens de maintien en tension, et l'élément central axial formant une structure tridimensionnelle rigide sous contrainte, dans laquelle les tiges d'armature, les moyens de maintien en tension et les supports de transducteurs sont de préférence démontables.

De préférence, l'antenne est une antenne acoustique destinée à l'imagerie acoustique, dans laquelle les transducteurs sont des microphones.

Selon un mode de réalisation de la présente invention, les moyens de maintien en tension comprennent des câbles tendus entre les extrémités libres des tiges d'armature à la périphérie de la structure tridimensionnelle rigide.

Selon un autre mode de réalisation de la présente invention, l'antenne comprend en outre des moyens de mise en tension qui peuvent être ou non les moyens de maintien en tension.

Selon un autre mode de réalisation de la présente invention, chacun des supports de transducteurs comprend un double brin formé par des tubes parallèles espacés, sur lesquels sont fixés les transducteurs, chaque support de transducteur comprenant une extrémité interne fixée à l'élément central axial, et une extrémité externe fixée à l'extrémité libre d'une desdites tiges d'armature, de telle sorte que les supports de transducteurs soient cintrés dans un même sens, dans le plan orthogonal à l'axe de l'élément central.

Selon un autre mode de réalisation de la présente invention, les supports de transducteurs forment des tronçons de spirale et présentent une densité croissante des transducteurs, du centre vers la périphérie de l'antenne.

Selon un autre mode de réalisation de la présente invention, chacun des supports de transducteurs comprend un double brin formé par des câbles parallèles espacés sur lesquels sont fixés les transducteurs, chaque support de transducteur étant tendu entre l'élément central et les moyens de maintien en tension ou l'extrémité libre d'une des tiges d'armature à la périphérie de la structure tridimensionnelle rigide.

Selon un autre mode de réalisation de la présente invention, la tension appliquée aux moyens de maintien en tension est telle que la déformation aux extrémités libres des tiges d'armature n'excède pas environ 3 cm +/- 10%, de préférence environ 2 cm +/- 10%, encore plus préférentiellement environ 1 cm +/- 10%, la déformation étant estimée à partir de la mesure du déplacement vertical des extrémités des tiges d'armature sous l'effet du poids de l'antenne en position de fonctionnement.

Selon un autre mode de réalisation de la présente invention, les tiges d'armatures comprennent un matériau de masse volumique inférieure à 3 g/cm$^3$, tel que la fibre de carbone.

Selon un autre mode de réalisation de la présente invention, l'antenne présente une envergure égale ou supérieure à environ 5 mètres.

Selon un autre aspect, l'invention concerne un dispositif comprenant une antenne selon l'invention et un piètement pour le maintien de l'antenne dans une position de fonctionnement, le piètement comprenant au moins un pied télescopique pour le réglage en hauteur de l'antenne, ledit pied télescopique comprenant, à son extrémité, une pièce de fixation de l'antenne permettant de faire pivoter l'antenne d'une position de montage à une position de fonctionnement.

Selon encore un autre aspect, l'invention concerne un procédé de montage d'une antenne selon l'invention, comprenant :

- la fixation des tiges d'armature à l'élément central axial ;
- le cintrage des tiges d'armature selon l'axe de l'élément central axial, par des moyens de mise en tension reliant les extrémités libres des tiges d'armature à la périphérie de l'antenne, de manière à former une coupole ;
- la mise en place de moyens de maintien en tension entre les extrémités libres des tiges d'armature à la périphérie de l'antenne,

de manière à former une structure tridimensionnelle rigide;

- et la fixation de supports de transducteurs à l'élément central axial et à l'extrémité libre des tiges d'armature ou aux moyens de maintien en tension à la périphérie de l'antenne, la fixation des supports comprenant de préférence leur mise sous contrainte.

D'autres objets et avantages de l'invention apparaîtront à la lecture de la description qui suit, de modes de réalisation particuliers de l'invention, donnés à titre d'exemples non limitatifs, la description étant faite en référence aux dessins annexés.

**BREVE DESCRIPTION DES DESSINS**

Les figures 1A et 1B (décrites précédemment) représentent des antennes connues de l'art antérieur. La figure 1A est une représentation en vue de face d'une antenne carrée de grande envergure pour l'imagerie acoustique. La figure 1B est une représentation en perspective d'une autre antenne commercialisée pour l'imagerie acoustique.

Les figures 2A, 2B et 2C représentent une antenne selon un premier mode de réalisation de l'invention. Elles représentent respectivement une vue en perspective, une vue de face et une vue de profil de l'antenne selon ce premier mode de réalisation.

La figure 3 présente schématiquement les paramètres géométriques utilisés pour définir le cintrage des tiges d'armature de l'antenne selon l'invention.

Les figures 4A et 4B sont des diagrammes illustrant la géométrie de répartition des transducteurs sur l'antenne selon l'invention. La figure 4A correspond à une géométrie de répartition en spirale, et la figure 4B illustre une géométrie de répartition en étoile.

Les figures 5A, 5B, et 5C représentent l'élément central axial de l'antenne selon l'invention. La figure 5A est une vue de profil d'un tel élément. Les figures 5B et 5C représentent respectivement une vue de dessus du noyau central et une vue dessous de l'étoile centrale, constituant les deux éléments principaux de l'élément central axial de l'antenne.

La figure 6 représente une vue du dessus d'une antenne selon un deuxième mode de réalisation de l'invention.

Les figures 7A et 7B représentent des vues de face de l'antenne selon l'invention en position de fonctionnement, selon deux modes de réalisation relatifs au piètement de l'antenne.

**DESCRIPTION DETAILLEE**

Sur les figures, les mêmes références désignent des éléments identiques ou analogues.

L'antenne selon l'invention comprend un réseau de transducteurs, et une structure tridimensionnelle rigide supportant ce réseau de transducteurs. Une telle antenne permet l'émission et/ou la réception de signaux sous formes d'ondes, dont l'énergie est transformée sous une même forme ou une forme différente par les transducteurs en réseau. Dans le cas particulier des ondes sonores, auquel s'applique en particulier l'invention, les transducteurs peuvent être des microphones dans le cas d'une antenne réceptrice, ou des haut-parleurs, dans le cas d'une antenne émettrice. Les modes de réalisation particuliers de l'invention décrits ci-après portent sur une antenne réceptrice comprenant un réseau de transducteurs qui sont des microphones, et utilisée dans le domaine de l'imagerie acoustique. Une telle antenne est utilisée en combinaison avec un dispositif d'analyse et de traitement de la mesure, et un système de visualisation des résultats. Toutefois, il est bien évident que l'antenne suivant l'invention pourra être adaptée à toute application mettant en jeu une antenne réceptrice et/ou émettrice d'autres types d'ondes, par exemple des ondes électromagnétiques, telles que des ondes radioélectriques ou lumineuses, sans pour autant sortir du cadre de l'invention.

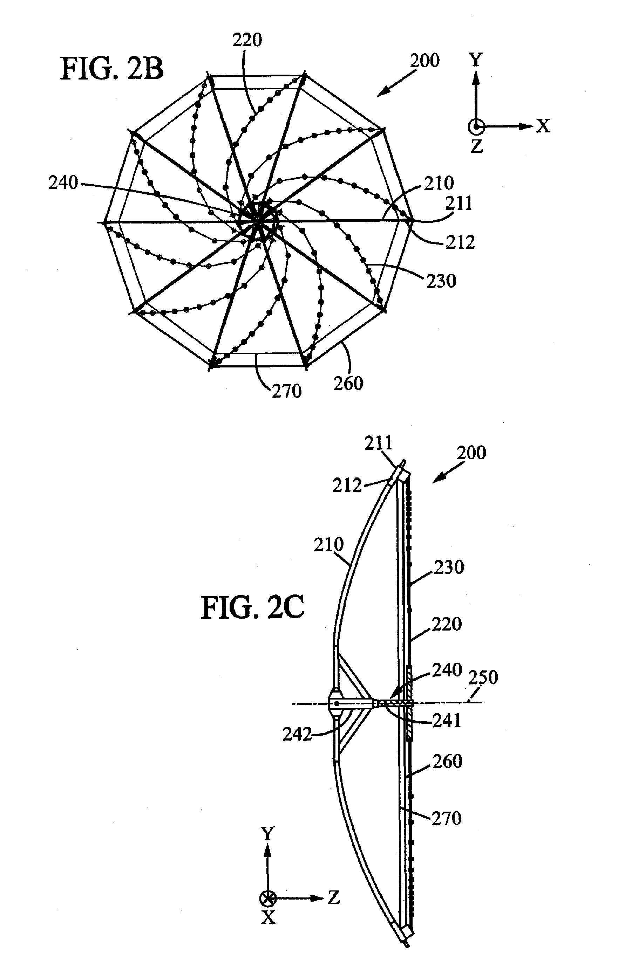

Une antenne selon un premier mode de réalisation de l'invention est illustrée par les figures 2A, 2B et 2C. Dans l'antenne 200, la structure tridimensionnelle rigide est formée par plusieurs éléments indépendants 210, 240, 260, qui sont montés ensemble, afin de constituer l'armature de l'antenne, sur laquelle est posé et fixé le réseau de microphones 230. L'avant de l'antenne 200, visible sur la vue de face de la figure 2B, est donc la partie de l'antenne où se situe le réseau de microphones 230. La structure tridimensionnelle comprend ainsi un élément central axial 240, des tiges d'armature 210, et des moyens de maintien en tension 260 reliant les extrémités libres des tiges d'armature 210, l'ensemble des éléments étant centrés autour d'un axe 250 définissant le centre de l'antenne 200.

Pour la suite de la description, on définit dans l'espace trois axes orthogonaux X, Y et Z, liés à l'antenne. L'axe 250 de l'antenne s'étend parallèlement à l'axe Z, et le réseau de microphones se situe dans un plan sensiblement parallèle au plan (XY) formé par les axes X et Y. La figure 2A représente une vue en perspective de l'antenne 200, dans laquelle l'axe Z est confondu avec la verticale, et où l'antenne est représentée telle que reposant sur un support horizontal, parallèle au plan (XY).

L'antenne 200 comprend un nombre variable de tiges d'armature 210, de préférence au moins 4, et avantageusement plus de 6 tiges, par exemple 8 ou 10 tiges. Les tiges d'armature 210 sont des pièces cylindriques allongées, constituées par un matériau résistant et léger, dont la masse volumique est de préférence inférieure à 3 g/cm$^3$, tel que la fibre de carbone, le kevlar, l'aluminium ou tout matériau composite en comprenant. Le choix de tels matériaux contribue, d'une part, à la légèreté de l'antenne, qui est alors aisément manipulable et transportable, et, d'autre part, à sa résistance physicochimique permettant de faire face aux diverses contraintes, telles que la dilatation, l'oxydation, la prise au vent, liées à une utilisation possible en environnement extérieur. Des mats de planches à voile en fibre de carbone, disponibles dans le commerce, peuvent par exemple être utilisés pour former les tiges d'armature 210. Cette possibilité a l'avantage d'être économique.

Chaque tige 210 comprend une extrémité montée et solidarisée à l'élément central axial 240, et une extrémité libre 211. Chaque tige 210 s'étend radialement à partir de l'élément central axial 240, de sorte que l'ensemble des tiges forme une structure en étoile centrée autour de l'axe 250.

Les extrémités libres 211 des tiges 210 sont reliées deux à deux par des moyens de maintien tension 260, correspondant à un système d'élingues, par exemple, constitué de câbles en acier inoxydable tendus au moyen de serre-câbles, et attachés aux extrémités libres des tiges 211 par l'intermédiaire d'une pièce 212. Cette pièce 212 est montée à l'extrémité libre 211 de chacune des tiges 210, et comprend une partie cylindrique contenant l'extrémité libre 211 de la tige 210, surmontée d'une partie plane, munie d'orifices, et s'étendant selon un plan contenant l'axe Z et la direction de la tige 210. La partie cylindrique de la pièce 212 comprend un anneau ou crochet, dans lequel passent des manilles ou des mousquetons retenant les câbles.

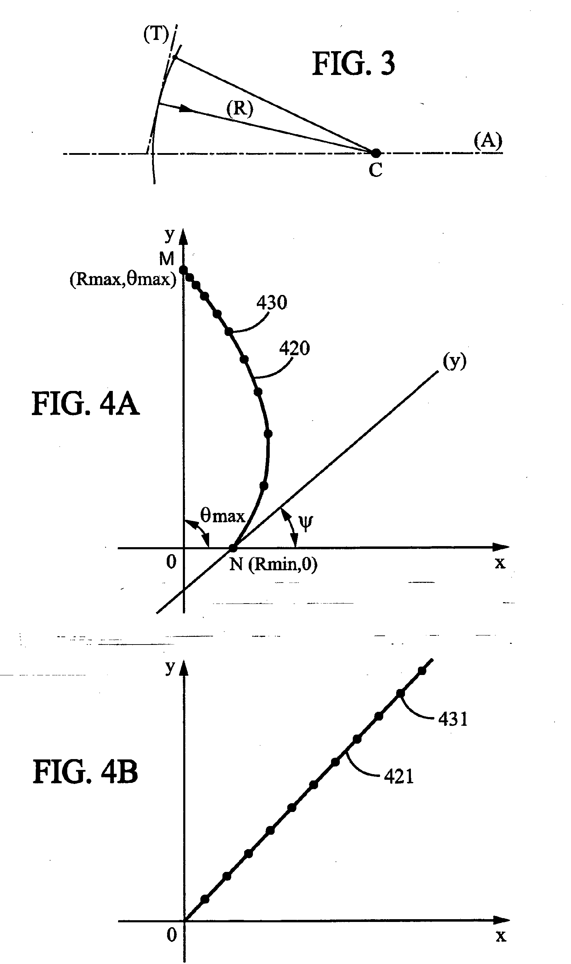

Les câbles 260, en exerçant une tension aux extrémités 211 des tiges 210 disposées en étoile, permettent le cintrage desdites tiges 210 selon l'axe 250, pour former une armature en forme générale de coupole. On parlera également, dans la présente demande, de cintrage dans la direction de l'axe 250. Plus précisément, les tiges 210 sont mises en flexion, et présentent une courbure, qui peut être définie, en référence à la figure 3, comme présentant un rayon de courbure R, dirigé vers un point C, situé sensiblement le long de l'axe A confondu avec l'axe 250, et vers lequel convergent les rayons de courbure de toutes les tiges cintrées 210.

La mise en tension des extrémités libres 211 des tiges 210 est effectuée à l'aide d'un système séparé d'élingues, tel que représenté sur les figures 2A à 2C sous la référence 270. Dans ce cas, l'antenne 200 comprend des moyens de mise en tension 270 distincts des moyens de maintien en tension 260, ces derniers étant mis en place une fois la mise en tension effectuée. Les moyens de mise en tension 270 comprennent, par exemple, une corde passant dans des anneaux accrochés aux orifices des parties planes des pièces 212. La corde est tendue au moyen d'un palan ou tout autre dispositif équivalent permettant une mise en tension de celle-ci.

Dans un autre mode de réalisation, la mise en tension et le maintien en tension des extrémités 211 des tiges 210 sont réalisées par un même système d'élingues, qui peut être l'un ou l'autre des moyens de maintien et de mise en tension décrits ci-dessus.

Les câbles tendus entre chaque extrémité des tiges 210 présentent l'avantage de permettre la maitrise de l'écartement entre chaque tige 210, en particulier d'assurer un écart constant entre les tiges 210 afin que l'armature de l'antenne 200 soit la plus symétrique possible. Cette symétrie est importante afin de fournir une antenne performante, notamment car la géométrie finale de l'armature de l'antenne conditionne la géométrie de répartition des microphones 230, qui est directement liée aux performances de l'antenne 200.

L'antenne 200 comprend également un réseau de microphones 230, posé et fixé sur l'armature tridimensionnelle rigide. Ce réseau de microphones 230 comprend des supports 220 de microphones 230, les supports 220 étant disposés selon une géométrie prédéfinie. Les microphones 230 sont par exemple des microphones ¼" présentant une réponse plate de 20 Hz à 10 kHz. Cette géométrie prédéfinie des supports 220 et la répartition des microphones 230 sur les supports 220 sont déterminées de manière à fournir une antenne performante.

Chaque support 220 de microphones 230 comprend un double brin formé par deux tubes parallèles espacés entre eux, lesdits tubes étant chacun disposé dans un plan contenant l'axe Z. La structure en double brin du support 220 permet de rigidifier ce dernier selon l'axe Z, en augmentant son moment d'inertie selon X et Y, tout en le limitant selon Z. Les tubes sont formés d'un matériau pouvant résister aux conditions d'utilisation en extérieur de l'antenne 200, tel que de l'acier inoxydable, de l'aluminium ou tout autre matériau suffisamment rigide pour supporter le poids des microphones 230. Le choix d'un matériau du type aluminium, fibre de carbone, kevlar, ou tout matériau composite en comprenant, pour les supports 220 de microphones 230, présente l'avantage d'alléger le poids de l'antenne, en comparaison à des supports 220 en acier.

Chaque support 220 comporte une extrémité interne fixée à l'élément central axial 240, et une extrémité externe fixée à l'extrémité libre 211 d'une des tiges d'armature 210, de telle sorte que les supports 220 soient, d'une part, cintrés de manière à ce que chaque support 220 forme un tronçon de spirale, et d'autre part, soient contenus dans un plan orthogonal à l'axe 250, sensiblement parallèle au plan XY. Ainsi, les supports 220 de microphones 230 sont cintrés dans un même sens et figurent tous dans un même plan sensiblement orthogonal à l'axe 250, qui correspond à la base de la coupole formée par les tiges d'armature 210 cintrées.

Chaque microphone 230 est fixé sur un support 220 de microphones 230, préalablement au montage de l'antenne 200, au moyen d'une pièce comportant un système d'accroche à chaque brin et un système d'accroche du microphone 230. Les microphones 230 sont répartis sur chaque support 220, de préférence selon une distribution non linéaire, avec un écartement entre les microphones 230 décroissant du centre vers la périphérie de l'antenne 200. Chaque support 220 de microphone 230 présente donc, de préférence, une densité croissante des microphones 230, de l'intérieur vers l'extérieur de l'antenne 200. Cette distribution, tout comme la géométrie des supports 220 de microphones 230, est calculée de manière à réaliser une antenne performante. L'antenne 200 comprend un grand nombre de microphones 230, de préférence plus de 80 microphones, avantageusement plus de 90 microphones, et encore plus avantageusement plus de 100 microphones. L'antenne 200 illustrée sur les figures 2A à 2C comporte 110 microphones 230, répartis en groupe de 11, sur chacun des 10 supports 220.

Les figures 4A et 4B illustrent deux exemples de géométrie d'un support 220 de microphones 230 et de répartition des microphones 230 sur ce support 220. La géométrie d'un support 220 et la répartition des microphones 230 sont prédéterminées. Elles se caractérisent par l'équation d'une courbe et par la distribution sur cette courbe de points particuliers correspondant à la position des microphones.

La figure 4A correspond à un exemple avantageux de répartition en spirale dans le cas d'une antenne 200, selon le premier mode de réalisation, représenté aux figures 2A à 2C.

En référence à la figure 4A, les microphones 230 sont distribués sur un tronçon de spirale 420 d'équa-tion générale $r(\theta) = R_{\min} \exp\left(\ln\left(\frac{R_{\min}}{R_{\max}}\right)\frac{\theta}{\theta_{\max}}\right)$,

où :

$\theta$ sont les coordonnées polaires d'un point sur la spirale,
$R_{min}$ est le rayon minimum du tronçon de spirale,
$R_{max}$ est le rayon maximum du tronçon de spirale, et
$\theta_{max}$ est l'angle maximum du tronçon de spirale, appelé également angle de déploiement de la spirale, et défini par les droites OM et ON, avec O le centre du repère, M ($R_{max}$, $\theta_{max}$) et N ($R_{min}$, 0) les extrémités du tronçon de spirale.

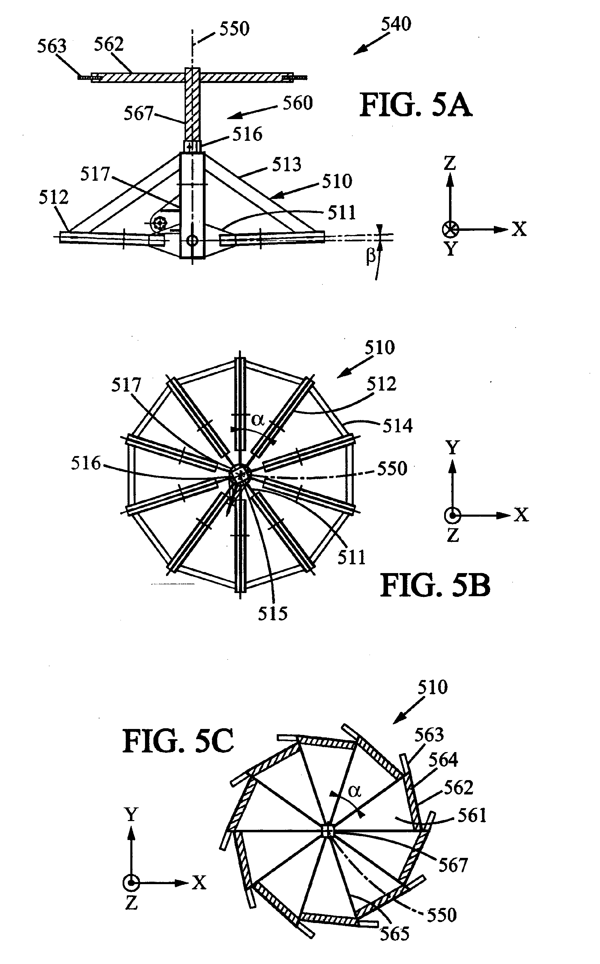

Chaque support 220 de microphones 230 subit une flexion, lors du montage de l'antenne, de manière à approcher l'équation de cette spirale logarithmique. Pour cela, les supports 220 sont caractérisés par une liaison encastrée au niveau des deux extrémités (externe et interne) du support 220. Les liaisons encastrées se caractérisent par une tangente d'encastrement colinéaire avec la tangente à la spirale aux points N ($R_{min}$, 0) et M ($R_{max}$, $\theta_{max}$,). A l'extrémité externe du support 220, la liaison encastrée est matérialisée par une pièce de liaison fixée sur la pièce 212, par exemple au moyens de boulons insérés dans les orifices de la pièce 212 prévus à cet effet, sur laquelle est fixée l'extrémité externe du support 220. L'angle formé par l'extrémité externe du support 220 et la tige d'armature 210 correspond sensiblement à l'angle tangentiel polaire $\psi$ formé par la tangente à la spirale au point M ($R_{max}$, $\theta_{max}$). Au niveau du point N ($R_{min}$, 0), cette liaison encastrée est matérialisée par l'emboitement d'une pièce rectangulaire 563 de l'élément central axial 240, en référence aux figures 5A et 5C, avec l'extrémité interne du support 220. L'angle d'encastrement formé par l'axe d'allongement de la pièce 563 correspond sensiblement à l'angle tangentiel polaire $\psi$, formé par la tangente (y) à la spirale au point N ($R_{min}$, 0).

La distribution des microphones 230, représentés par des points 430 sur le tronçon de spirale 420, est non linéaire, avec une diminution de l'écart entre deux points adjacents du centre O vers l'extrémité M du tronçon de la spirale 420. Ainsi, chaque support 220 de microphones 230 présente une densité croissante des microphones 230, du centre à la périphérie de l'antenne.

Les supports 220 de microphones 230 sont disposés selon une symétrie circulaire autour de l'axe 250. Chaque support 220 de microphones 230 est décalé d'un angle $\alpha$ qui dépend du nombre S de supports 220 de microphones. Ainsi l'angle $\alpha$ est égal à $\frac{2.\pi}{S}$.

L'angle de déploiement maximum $\theta_{max}$ est de préférence inférieur ou égal à une valeur donnée, par exemple environ 100°.

Le nombre de supports 220 de microphones 230, l'équation de la spirale, et plus généralement la forme des supports 220, ainsi que le nombre de microphones 230 et leur distribution sur les supports 220 sont choisis de manière à réaliser une antenne performante.

Une antenne performante est par exemple une antenne présentant, pour une direction focale couvrant un angle de site de -45° à 45° et un angle d'azimut de -45° à 45°:

■ une ouverture du lobe principal du diagramme de réception (ou d'émission) à - 3 dB qui soit inférieure à environ 12° à 300 Hz,
■ une atténuation d'au moins environ 12 dB entre le lobe principal et les lobes secondaires du diagramme de réception jusqu'à 6000 Hz.

Une telle antenne est, par exemple, obtenue avec un réseau de microphones comprenant 10 supports 220 de microphones 230 décalés d'un angle $\alpha$ de 36°, 11 microphones 230 répartis sur chaque support 220, sans compter un éventuel microphone central, et dans lequel la forme des supports 220 se rapproche de l'équation d'une spirale logarithmique où $R_{min}$ = 0.5 m, $R_{max}$ = 3 m, et $\theta_{max}$ = 90°, telle que représentée sur la figure 4A.
Les figures 5A, 5B et 5C représentent plus en détails l'élément central axial 540 de l'antenne selon l'invention. Dans ces figures, l'axe Z est parallèle à l'axe 550 autour duquel est centré l'élément central axial 540. L'élément central axial 540 comprend deux parties fixées ensemble, une première partie 510 située à l'arrière de l'antenne, également appelée noyau central 510 dans la présente demande, et une deuxième partie 560 située à l'avant de l'antenne, appelée étoile centrale 560. La partie inférieure 510, dont une vue de dessus est représentée à la figure 5B, est destinée à recevoir les extrémités des tiges d'armature 210. La partie supérieure 560, illustrée sous la forme d'une vue de dessous à la figure 5C, est destinée à recevoir les extrémités internes des supports 220 de microphones 230. Le noyau central 510, tout comme l'étoile centrale 560, sont par exemple des ensembles mécano-soudés.
Le noyau central 510 comprend un tube cylindrique central 517 en métal, et des tubes cylindriques radiaux 512, disposés en étoile autour de la base du tube cylindrique central 517, et destinés à recevoir les extrémités des tiges d'armature 210. Le nombre de tubes radiaux 512 est donc variable selon le nombre de tiges d'armature 210 de l'antenne 200. Les tubes 512 sont séparés deux à deux par un angle $\alpha$, tel que défini plus haut. Les tubes radiaux 512 sont liés entre eux par des raidisseurs périphériques 514, constitués par des pièces en métal allongées et aplaties, en forme de trapèze, soudées entre les extrémités distales prises deux à deux des tubes radiaux 512. Chaque tube radial 512 est relié au tube central 517 d'une part par l'intermédiaire d'une jambe de force 513, soudée entre la partie haute du noyau central 510 et l'extrémité distale du tube radial 512, et d'autre part par l'intermédiaire d'un support 511.

Les supports 511 sont des pièces en métal aplaties, formant des trapèzes, soudées à la base du tube central 517 selon un plan comprenant l'axe Z. La fixation des tubes radiaux 512 aux supports 511 se fait par emboîtement puis soudage des extrémités fendues des tubes radiaux 512 dans le support 511. Les tubes radiaux 512 ainsi fixés sont inclinés d'un angle $\beta$ par rapport au plan XY. Cette inclinaison permet d'amorcer la mise en flexion dans une même direction, celle de l'axe 550, des tiges d'armature 210, lors du montage de l'antenne 200. Les extrémités des tiges d'armature 210 sont emmanchées en force dans les tubes radiaux 512. Celles-ci peuvent être solidarisées par tout autre moyen qui puisse être démontable. Un tube creux central 516, à section carrée, est soudé à l'extrémité supérieure du tube cylindrique 517, et permet de recevoir l'étoile centrale 560.
L'étoile centrale 560 comprend un tube central 567 à section carrée, s'insérant dans le tube creux central 516 du noyau central 510, où il est fixé par un boulon traversant des trous prévus à cet effet dans chacun des tubes 567 et 516. A l'autre extrémité du tube central 567, l'étoile centrale 560 comprend des structures triangulaires 561 formées par des plats périphériques 562 et 564, et des plats radiaux 565, soudés entre eux. Les structures triangulaires 561 sont jointives, chaque plat radial 565 s'étendant radialement depuis le tube central 567, et formant le côté de deux triangles 561 adjacents. Les plats 562, 564 et 565 sont des pièces en métal, allongées et aplaties, disposées verticalement pour les plats radiaux 565 et les plats périphériques 564, c'est-à-dire présentant leur face aplatie dans un plan contenant l'axe Z, et horizontalement pour les plats périphériques 562, c'est-à-dire présentant leur face aplatie dans un plan parallèle au plan XY. Les plats périphériques 562 et 564 constituent des pièces en forme de L, par soudage d'un plat 564 orthogonalement à un plat 562. Tous les plats radiaux 565 sont identiques et de forme rectangulaire, ce qui est également le cas pour tous les plats périphériques 564. Les plats périphériques 562 sont également identiques, mais en forme de trapèze. Les plats radiaux 565 sont séparés d'un angle $\alpha$ tel que défini précédemment, à l'instar des tubes radiaux 512 du noyau central 510. Chaque ensemble de plats périphériques 562, 564 est fixé par soudage aux extrémités distales de deux plats 565 adjacents, à deux distances différentes, de manière à ce que les structures triangulaires 561 soient décalées deux à deux d'un écart constant, dans un même sens de rotation autour de l'axe 550. Un plateau circulaire en métal (non représenté dans les figures 5A à 5C), de rayon inférieur à la longueur des plats radiaux 564, est soudé à ceux-ci et participe à la rigidité de l'étoile centrale 560. Ce plateau est situé à l'avant de l'antenne 200 et comporte un orifice central à travers lequel passe le tube 567. Chaque structure triangulaire 561 présente une protubérance latérale 563 en forme de parallélépipède rectangle, située sur la partie externe du plat 565 au niveau du décalage créé entre deux structures triangulaires 561. Ces protubérances latérales 563 permettent l'encastrement des extrémités internes des supports 220 de microphones 230 de l'antenne. Leur axe d'allongement forme un angle avec le plat 564 de la structure triangulaire 561 adjacente, aussi appelé angle d'encastrement, qui s'approche sensiblement de l'angle tangentiel polaire ψ formé par la tangente à la spirale au niveau du premier microphone, en référence à la figure 4A.

Les différents éléments constitutifs du noyau central 510 et de l'étoile centrale 560 sont formés en acier inoxydable, en aluminium ou tout autre matériau rigide pouvant résister aux conditions d'utilisation en extérieur de l'antenne 200. L'utilisation de matériaux résistants à l'usure, tel que l'acier inoxydable, pour le noyau central et/ou les autres éléments de l'antenne, contribue à diminuer les couts de maintenance de l'antenne.

La rigidité de l'antenne 200 est obtenue avec le cintrage maitrisé des tiges d'armature 210 par les moyens de maintien en tension 260 situés à la périphérie de l'antenne 200. L'ensemble des tiges d'armature 210, des moyens de maintien en tension 260, et l'élément central axial 240 forment une structure tridimensionnelle rigide sous contrainte. En particulier, les forces antagonistes qui s'exercent sur les éléments de la structure tridimensionnelle permettent à celle-ci d'acquérir une rigidité dans les trois directions X, Y, Z de l'espace, satisfaisante pour les applications visées. En considérant l'antenne 200 une fois montée et en position de fonctionnement, c'est-à-dire de préférence en position verticale, où le réseau de transducteurs 230 est sensiblement dans le plan vertical, la rigidité de l'antenne 200 peut s'exprimer au travers de la déformation de l'antenne 200 sous l'effet de la gravité. Une estimation de cette déformation peut être réalisée à partir de la mesure de la déformation à la périphérie de l'antenne 200. Par exemple, si l'antenne 200 est maintenue en position verticale, par un piètement central fixé à l'élément central axial 240, l'antenne se déforme sous l'effet de son propre poids. Un déplacement vertical des extrémités libres 211 des deux tiges d'armature 210 horizontales opposées inférieur ou égal à environ 3 cm +/- 10%, de préférence inférieur ou égal à environ 2 cm +/- 10%, plus préférentiellement encore inférieur ou égal à environ 1 cm +/-10%, est considéré comme satisfaisant pour la rigidité d'une antenne d'une envergure de 6 mètres selon l'invention. La déformation aux extrémités libres 211 des tiges d'armature 210 est par exemple d'environ 2 cm +/- 10% pour une telle antenne, dans laquelle les pièces 212, fixées aux extrémités libres 211 des tiges d'armatures 210 sont en acier. L'utilisation d'aluminium pour les pièces 212 permet par exemple de réduire cette déformation.

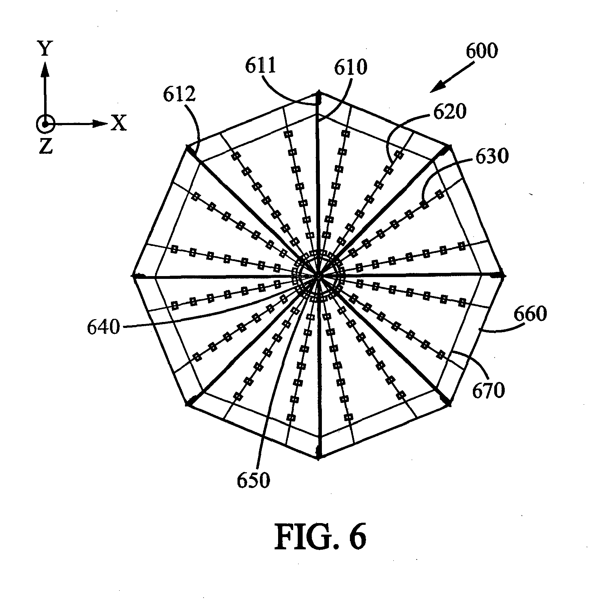

La figure 6 illustre une antenne 600 selon un second mode de réalisation de l'invention. L'antenne 600 diffère essentiellement de l'antenne 200 au niveau des supports de microphones. Les supports 620 de microphones 630 comprennent des doubles brins, chacun étant formé par deux câbles parallèles espacés, tendus entre l'élément central axial 640 et les moyens de maintien en tension 660 ou les extrémités 611 des tiges d'armature 610. La structure en double-brin permet d'empêcher toute rotation des microphones 630, placés sur les double-brins par l'intermédiaire de moyens de fixation. Les microphones 630 sont répartis le long de chaque support 620 de microphones 630 selon une distribution linéaire constante, telle que représentée plus en détails à la figure 4B. En référence à la figure 4B, les microphones 630, représentés par des points 431, et situés sur un support 620 représenté par une droite 421, sont espacés deux à deux selon un écart constant. L'ensemble des microphones 630 forment alors un réseau en toile d'araignée. D'autres types de répartition peuvent être envisagés, telle qu'une distribution linéaire croissante, aboutissant à une densité croissante des microphones 630, du centre à la périphérie de l'antenne 600, ou tout autre répartition en fonction de l'application envisagée pour l'antenne. Les supports 620 et les microphones 630 forment ainsi un réseau de microphones 630 en étoile, centré autour de l'axe 650, qui définit le centre de l'antenne 600, comme pour l'antenne 200. La structure de l'élément central axial 640 est sensiblement la même que celle décrite aux figures 5A à 5C, en particulier en ce qui concerne le noyau central axial. L'étoile centrale 560 est modifiée de manière à permettre l'accroche des double-brins formés par les câbles, par exemple au moyen d'orifices et d'anneaux prévus dans les structures triangulaires 561.

L'antenne 200, 600 selon l'invention est une structure entièrement démontable. Les éléments individuels formant son armature et ceux formant le réseau de microphones constituent des sous-ensembles indémontables qui peuvent être manipulés et transportés facilement. Ces sous-ensembles correspondent en particulier au noyau central 510 et à l'étoile centrale 560 formant l'élément central axial 240, 540, 640, aux tiges d'armatures 210, 610, aux moyens de maintien en tension 260, 660 pris individuellement, éventuellement aux moyens distincts de mise en tension 270, 670, et aux supports 220, 620 de microphones 230, 630. Le poids de ces sous-ensembles autorise leur chargement, leur déchargement, leur transport et leur montage par un nombre restreint d'opérateurs, de préférence une seule personne. Ces sous-ensembles peuvent être regroupés de manière à former des unités transportables. Par exemple, un poids inférieur ou égal à environ 30 kg pour ces sous-ensembles ou ces unités transportables est bien adapté à l'intervention d'une seule personne.

Le montage de l'antenne comprend plusieurs étapes. La première consiste à fixer les tiges d'armature 210, 610 à l'élément central axial 240, 540, 640. Pour cela, l'extrémité 211, 611 de chaque tige d'armature 210, 610 est emmanchée en force dans un tube radial du noyau central de l'élément central axial 240, 640, disposé sur un support horizontal. La deuxième étape consiste à cintrer les tiges d'armature 210, 610 selon l'axe 250, 650, de l'élément central 240, 540, 640, par des moyens de mise en tension 270, 670 reliant les extrémités libres 211, 611 des tiges d'armature 210, 610, de manière à former une coupole. Lors de cette étape, au moins un opérateur met en tension les extrémités 211, 611 des tiges 210, 610 par l'intermédiaire d'un système d'élingues, comprenant une corde, que l'opérateur fait passer dans des anneaux situés sur les pièces 212, 612 aux extrémités libres 211, 611 des tiges d'armature 210, 610, et qui est tendue au moyen d'un palan. L'effort dans chaque tige d'armature 210, 610 est de l'ordre de 100 kg, pour une antenne de 6 mètres d'envergure comprenant dix tiges d'armature 210, 610. L'étape suivante consiste à mettre en place les moyens de maintien en tension 260, 660 entre les extrémités libres 211, 611 des tiges d'armature 210, 610 à la périphérie de l'antenne, de manière à former une structure tridimensionnelle rigide. Ces moyens 260, 660 peuvent être confondus ou non avec les moyens de mise en tension 270, 670. Avantageusement, les moyens de mise en tension 270, 670 et de maintien en tension 260, 660 sont des moyens distincts, et les moyens de maintien en tension 260, 660 comprennent de préférence un système d'élingues comprenant des câbles et des manilles ou mousquetons. Les moyens de maintien en tension 260, 660 permettent de maintenir la tension appliquée entre les extrémités 211, 611 de chaque tige d'armature 210, 610. Dans le cas de moyens de mise en tension 270, 670 et de maintien en tension 260, 660 distincts, l'opérateur fait passer un câble entre deux extrémités 211, 611 des tiges d'armature 210, 610, à l'intérieur d'anneaux montés sur les pièces 212, 612 situées aux extrémités des tiges, au moyen de manilles ou de mousquetons. Cette opération est répétée de manière à ce qu'un câble relie deux-à-deux les extrémités 211, 611 des tiges d'armature 210, 610. Dans le cas d'une antenne 200, 600 à 10 tiges d'armature, 10 câbles sont ainsi nécessaires au maintien en tension des extrémités 211, 611 des tiges 210, 610.Les moyens de mise en tension 270, 670 sont ensuite relâchés afin que les moyens de maintien en tension 260, 660 reprennent l'effort appliqué et soit ainsi tendus. Enfin, la dernière étape de montage de l'antenne consiste à mettre en place et fixer des supports 220, 620 de transducteurs 230, 630 à l'armature de l'antenne 200, 600. Les supports 220, 620 de transducteurs 230, 630 sont ainsi fixés un à un à l'élément central axial 240, 540, 640 et à l'extrémité libre 211, 411 des tiges d'armature 210, 610 ou aux moyens de maintien en tension 660 à la périphérie de l'antenne. La fixation des supports 220, 660 comprenant de préférence leur mise sous contrainte. Cette mise sous contrainte des supports 220, 660 correspond à un cintrage dans le cas du premier mode de réalisation de l'antenne 200, où les supports 220 comprennent des double-brins formé par deux tubes parallèles espacés, et formant des tronçons de spirale. Dans le cas du deuxième mode de réalisation de l'antenne 600, où les supports 620 correspondent à des double-brins formé par des câbles tendus, il s'agit d'une mise en tension des câbles.

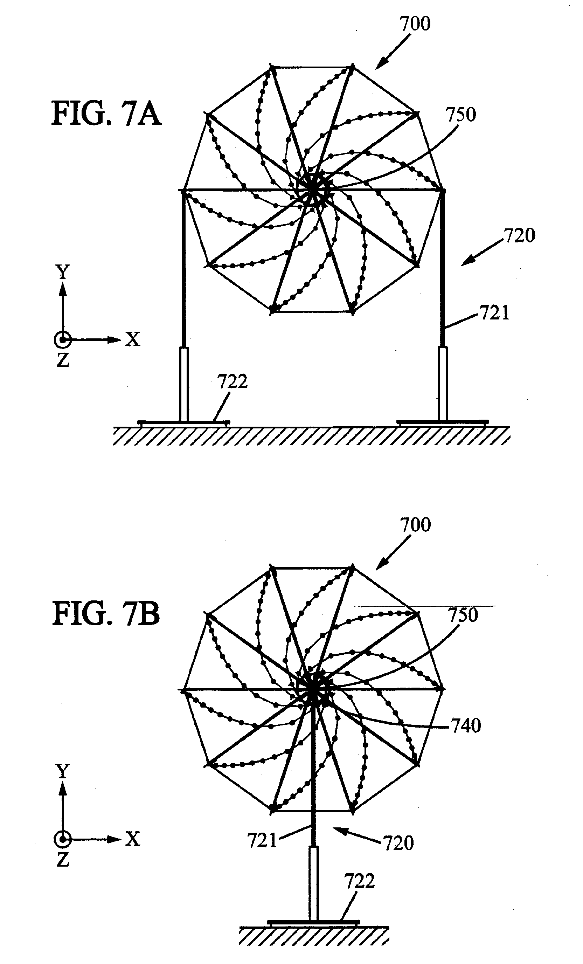

Lors de son montage, l'antenne 200, 600 est placée de préférence sur un piètement, de manière à être disposée, une fois montée, dans sa position de fonctionnement, où le réseau de transducteurs 230, 630, contenu dans un plan parallèle au plan XY, est en général confondu avec la verticale. Alternativement, l'antenne 200, 600 est d'abord montée au sol, puis mise en place sur le piètement. Deux modes de réalisation du piètement sont illustrés aux figures 7A et 7B. Un premier mode de réalisation du piètement 720 de l'antenne 700 comprend deux pieds télescopiques 721 écartés d'une distance correspondant à l'envergure de l'antenne, soit la plus grande distance entre deux points opposés situés à la périphérie de l'antenne. Chaque pied 720 comprend une base 722, un tube télescopique 721, et une pièce de fixation de l'antenne 700 (non représentée). La base 722 comprend un tube central fixé à un plateau disposé au sol. Selon ce premier mode de réalisation du piètement, l'antenne 700 est d'abord montée, puis placée sur le piètement 720. Chaque pied 720 est positionné à l'extrémité libre de deux tiges d'armature opposées, et y est fixé par l'intermédiaire de la pièce de fixation permettant à l'antenne de pivoter d'une position de montage, par exemple horizontale, à une position de fonctionnement, par exemple verticale. Cette pièce de fixation permet également le blocage de l'antenne dans ces deux positions extrêmes. D'autres positions de blocages pourraient être envisagées. La hauteur du pied 721 dans sa position initiale non déployée elle telle qu'un opérateur peut, éventuellement en prenant appui sur un support surélevé, tel qu'un escabeau, fixer l'antenne 700 aux pieds 721. L'antenne 700 est ensuite pivotée puis réglée en hauteur avec le déploiement manuel ou automatique des pieds télescopiques 720. Le pivotement peut également être effectué après le régalage en hauteur de l'antenne 700. Un mode de réalisation préféré du piètement de l'antenne 700 est représenté à la figure 7B. Dans ce second mode de réalisation, le piètement 720 comprend un seul pied télescopique 721, similaire à ceux décrit précédemment, fixé à l'arrière de l'antenne 700, au niveau de l'élément central axial 740. Lorsqu'un piètement selon ce second mode de réalisation est utilisé, l'antenne 700 est de préférence placée directement sur le piètement 720 au début de son montage. L'antenne 700 est ensuite pivotée de sa position de montage, par exemple horizontale, à une position de fonctionnement, par exemple verticale. Ainsi, au début du montage de l'antenne 700, le noyau central de l'élément central axial 740 est fixé sur le pied télescopique, de manière à ce que le tube cylindrique central du noyau central soit vertical. L'étoile centrale de l'élément central axial 740 est ensuite fixée sur le noyau central, et l'antenne 700 est montée. Un tel piètement 720 présente l'avantage de fournir un support mécanique à l'élément central axial 740, ce qui contribue à limiter la déformation de l'antenne 700, due notamment au poids de cet élément central axial 740.

Avantageusement, le temps de montage de l'antenne 200, 600, 700, ou de démontage de l'antenne 200, 600, 700 est rapide. Ce temps dépend bien sûr de l'envergure de l'antenne 200, 600, 700. La durée de l'installation de l'antenne, incluant le montage ou démontage de l'antenne, ainsi que la mise en position de fonctionnement de l'antenne, ne doit pas excéder environ une heure. Ce temps d'installation est estimé à partir du déchargement des éléments constitutifs de l'antenne 200, 600, 700 jusqu'à la connexion des appareils de mesure.

L'antenne selon l'invention pourra comporter des appareils photos et/ou caméras, en plus des microphones, afin de fournir une antenne améliorée pour l'imagerie acoustique, combinant des informations visuelles et sonores de l'environnement et/ou les objets étudiés.

L'antenne selon l'invention, décrite dans le cadre d'une application à l'imagerie acoustique, pourrait aisément être adaptée à d'autres types d'applications.

Par exemple, le réseau de transducteurs pourra être un réseau de capteurs optiques, dans le cadre d'application en imagerie optique.

## Revendications

1. Antenne (200, 600, 700) destinée à porter un réseau de transducteurs (230, 430, 431, 630), comprenant :

   - un axe (250, 650, 750) définissant le centre de l'antenne (200, 600, 700) ;
   - des tiges d'armature (210, 610) disposées en étoile autour d'un élément central axial (240, 640, 740);
   - des moyens de maintien en tension (260, 660) reliant les extrémités libres (211, 611) desdites tiges d'armature (210, 610) à la périphérie de l'antenne (200, 600, 700), de manière à cintrer lesdites tiges (210, 610) dans la direction de l'axe de l'élément central axial (240, 640, 740) pour former une armature en forme générale de coupole ;
   - des supports de transducteurs (220, 420, 421, 620), disposés autour de l'élément central axial (240, 640, 740), dans un plan orthogonal à l'axe (250, 650, 750) de l'élément central (240, 640, 740), lesdits supports (220, 620) étant de préférence sous contrainte,

   l'ensemble des tiges d'armature (210, 610), des moyens de maintien en tension (260, 660), et l'élément central axial (240, 640, 740) formant une structure tridimensionnelle rigide sous contrainte, dans laquelle les tiges d'armature (210, 420, 421, 610), les moyens de maintien en tension (260, 660) et les supports de transducteurs (220, 620) sont de préférence démontables.

2. Antenne acoustique pour l'imagerie acoustique, comprenant une antenne selon la revendication 1, dans laquelle les transducteurs (230, 430, 431, 630) sont des microphones.

3. Antenne selon l'une des revendications 1 ou 2, dans laquelle les moyens de maintien en tension (260, 660) comprennent des câbles tendus entre les extrémités libres des tiges d'armature (210, 610) à la périphérie de la structure tridimensionnelle rigide.

4. Antenne selon l'une des revendications précédentes, comprenant en outre des moyens de mise en tension (270, 670) qui peuvent être ou non les moyens de maintien en tension (260, 660).

5. Antenne selon l'une des revendications précédentes, dans laquelle chacun desdits supports de transducteurs (220, 420) comprend un double brin formé par des tubes parallèles espacés, sur lesquels sont fixés les transducteurs (230, 430), chaque support de transducteur (220) comprenant une extrémité interne fixée à l'élément central axial (240, 740), et une extrémité externe fixée à l'extrémité libre (211) d'une desdites tiges d'armature (210), de telle sorte que lesdits supports de transducteurs (220) soient cintrés dans un même sens dans le plan orthogonal à l'axe (250, 750) de l'élément central (240, 540, 740).

6. Antenne selon la revendication 5, dans laquelle les supports de transducteurs (220, 420) forment des tronçons de spirale et présentent une densité croissante des transducteurs (230, 430), du centre vers la périphérie de l'antenne (200, 700).

7. Antenne selon l'une des revendications 1 à 4, dans laquelle chacun desdits supports de transducteurs (421, 620) comprend un double brin formé par des câbles parallèles espacés sur lesquels sont fixés les transducteurs (431, 630), chaque support de transducteur (421, 620) étant tendu entre l'élément central (540, 640, 740) et les moyens de maintien en tension (660) ou l'extrémité libre (611) d'une desdites tiges d'armature (610) à la périphérie de la structure tridimensionnelle rigide.

8. Antenne selon l'une des revendications précédentes, dans laquelle la tension appliquée aux moyens de maintien en tension (260, 660) est telle que la déformation aux extrémités libres des tiges d'armature (210, 610) n'excède pas environ 3 cm +/- 10%, la déformation étant estimée à partir de la mesure du déplacement vertical des extrémités (211, 611) des tiges d'armature (210, 610) sous l'effet du poids de l'antenne (200, 600, 700) en position de fonctionnement.

9. Antenne selon l'une des revendications précédentes, dans laquelle les tiges d'armature (210, 610) comprennent un matériau de masse volumique inférieure à 3 g/cm$^3$, tel que la fibre de carbone.

10. Antenne selon l'une des revendications précédentes, dont l'envergure est égale ou supérieure à environ 5 mètres.

11. Dispositif comprenant une antenne selon l'une des revendications précédentes et un piètement (720) pour le maintien de ladite antenne (200, 600, 700) dans une position de fonctionnement, ledit piètement (720) comprenant au moins un pied télescopique (721) pour le réglage en hauteur de l'antenne (200, 600, 700), ledit pied télescopique (721) comprenant à son extrémité une pièce de fixation de l'antenne (200, 600, 700) permettant de faire pivoter ladite antenne (200, 600, 700) d'une position de montage à une position de fonctionnement.

12. Procédé de montage d'une antenne (200, 600, 700) selon la revendication 1, comprenant :

- la fixation des tiges d'armature (210, 610) à l'élément central axial (240, 640, 740) ;
- le cintrage des tiges d'armature (210, 610) selon l'axe de l'élément central axial (240, 640, 740), par des moyens de mise en tension (270, 670) reliant les extrémités libres (211, 611) des tiges d'armature (210, 610) à la périphérie de l'antenne (200, 600, 700), de manière à former une coupole ;
- la mise en place de moyens de maintien en tension (260, 660) entre les extrémités libres (211, 611) des tiges d'armature (210, 610) à la périphérie de l'antenne (200, 600, 700),

de manière à former une structure tridimensionnelle rigide;

- et la fixation de supports de transducteurs (220, 420, 421, 620) à l'élément central axial (240, 640, 740) et à l'extrémité libre (211, 611) des tiges d'armature (210, 610) ou aux moyens de maintien en tension (260, 660) à la périphérie de l'antenne (200, 600, 700), ladite fixation des supports (220, 420, 421, 620) comprenant de préférence leur mise sous contrainte.

**Patentansprüche**

1. Antenne (200, 600, 700), die zum Tragen eines Netzes von Wandlern (230, 430, 431, 630) vorgesehen ist und Folgendes umfasst:

- eine Achse (250, 650, 750), die die Mitte der Antenne (200, 600, 700) definiert;
- Gestellstangen (210, 610), die sternförmig um ein axiales zentrales Element (240, 640, 740) herum angeordnet sind;
- Spannungserhaltungsmittel (260, 660), die die freien Enden (211, 611) der besagten Gestellstangen (210, 610) mit dem Umfang der Antenne (200, 600, 700) verbinden, so dass die besagten Stangen (210, 610) in der Richtung der Achse des axialen zentralen Elements (240, 640, 740) gebogen werden, um ein Gestell in einer allgemeinen Kuppelform zu bilden;
- Wandlerträger (220, 420, 421, 620), die um das axiale zentrale Element (240, 640, 740) herum in einer orthogonalen Ebene zu der Achse (250, 650, 750) des zentralen Elements (240, 640, 740) angeordnet sind, wobei die besagten Träger (220, 620) vorzugsweise unter Spannung stehen,

wobei die Einheit der Gestellstangen (210, 610), der Spannungserhaltungsmittel (260, 660) und des axialen zentralen Elements (240, 640, 740) eine unter Druck stehende starre dreidimensionale Struktur bildet, wobei die Gestellstangen (210, 420, 421, 610), die Spannungserhaltungsmittel (260, 660) und die Wandlerträger (220, 620) vorzugsweise demontierbar sind.

2. Akustische Antenne für akustische Abbildung, die eine Antenne nach Anspruch 1 umfasst, wobei die Wandler (230, 430, 431, 630) Mikrofone sind.

3. Antenne nach einem der Ansprüche 1 oder 2, wobei die Spannungserhaltungsmittel (260, 660) Kabel umfassen, die zwischen den freien Enden der Gestellstangen (210, 610) am Umfang der starren dreidimensionalen Struktur gespannt sind.

4. Antenne nach einem der vorhergehenden Ansprüche, die außerdem Spannmittel (270, 670) umfasst, bei denen es sich gegebenenfalls um die Spannungserhaltungsmittel (260, 660) handeln kann.

5. Antenne nach einem der vorhergehenden Ansprüche, wobei jeder der besagten Wandlerträger (220, 420) einen Doppelstrang umfasst, der von voneinander beabstandeten parallelen Rohren gebildet wird, auf denen die Wandler (230, 430) befestigt sind, wobei jeder Wandlerträger (220) ein inneres Ende, das an dem axialen zentralen Element (240, 740) befestigt ist, und ein äußeres Ende, das an dem freien Ende (211) einer der besagten Gestellstangen (210) befestigt ist, umfasst, so dass die besagten Wandlerträger (220) in derselben Richtung in der orthogonalen Ebene zu der Achse (250, 750) des zentralen Elements (240, 540, 740) gebogen werden.

6. Antenne nach Anspruch 5, wobei die Wandlerträger (220, 420) Spiralabschnitte bilden und eine von der Mitte zu dem Umfang der Antenne (200, 700) zunehmende Dichte von Wandlern (230, 430) aufweisen.

**7.** Antenne nach einem der Ansprüche 1 bis 4, wobei jeder der besagten Wandlerträger (421, 620) einen Doppelstrang umfasst, der von voneinander beabstandeten parallelen Kabeln gebildet wird, auf denen die Wandler (431, 630) befestigt sind, wobei jeder Wandlerträger (421, 620) zwischen dem zentralen Element (540, 640, 740) und den Spannungserhaltungsmitteln (660) oder dem freien Ende (611) einer der besagten Gestellstangen (610) am Umfang der starren dreidimensionalen Struktur gespannt ist.

**8.** Antenne nach einem der vorhergehenden Ansprüche, wobei die auf die Spannungserhaltungsmittel (260, 660) angewendete Spannung derart ist, dass die Verformung an den freien Enden der Gestellstangen (210, 610) nicht ungefähr 3 cm +/- 10 % übersteigt, wobei die Verformung aus der Messung der vertikalen Verlagerung der Enden (211, 611) der Gestellstangen (210, 610) unter Einwirkung des Gewichts der Antenne (200, 600, 700) in Betriebsstellung geschätzt wird.

**9.** Antenne nach einem der vorhergehenden Ansprüche, wobei die Gestellstangen (210, 610) ein Material mit einer Volumenmasse, die kleiner als 3 g/cm$^3$ ist, wie Kohlenstofffaser, umfasst.

**10.** Antenne nach einem der vorhergehenden Ansprüche, dessen Spannweite größer gleich ungefähr 5 Meter ist.

**11.** Vorrichtung, die eine Antenne nach einem der vorhergehenden Ansprüche und ein Fußgestell (720) zum Halten der besagten Antenne (200, 600, 700) in einer Betriebsstellung umfasst, wobei das besagte Fußgestell (720) mindestens einen Teleskopfuß (721) zur Höheneinstellung der Antenne (200, 600, 700) umfasst, wobei der besagte Teleskopfuß (721) an seinem Ende ein Teil zur Befestigung der Antenne (200, 600, 700) umfasst, das das Schwenken der besagten Antenne (200, 600, 700) von einer Montagestellung in eine Betriebsstellung ermöglicht.

**12.** Verfahren zur Montage einer Antenne (200, 600, 700) nach Anspruch 1, das Folgendes umfasst:

- Befestigen von Gestellstangen (210, 610) an dem axialen zentralen Element (240, 640, 740);
- Biegen von Gestellstangen (210, 610) gemäß der Achse des axialen zentralen Elements (240, 640, 740) durch Spannmittel (270, 670), wobei die freien Enden (211, 611) der Gestellstangen (210, 610) mit dem Umfang der Antenne (200, 600, 700) verbunden werden, so dass eine Kuppel gebildet wird;
- Anordnen von Spannungserhaltungsmitteln (260, 660) zwischen den freien Enden (211, 611) der Gestellstangen (210, 610) am Umfang der Antenne (200, 600, 700), so dass eine starre dreidimensionale Struktur gebildet wird;
- Befestigen von Wandlerträgern (220, 420, 421, 620) an dem axialen zentralen Element (240, 640, 740) und an dem freien Ende (211, 611) der Gestellstangen (210, 610) oder an den Spannungserhaltungsmitteln (260, 660) am Umfang der Antenne (200, 600, 700), wobei das besagte Befestigen der Träger (220, 420, 421, 620) vorzugsweise deren Unterspannungsetzen umfasst.

**Claims**

**1.** Antenna (200, 600, 700) intended to carry a network of transducers (230, 430, 431, 630), comprising:

- an axis (250, 650, 750) defining the centre of the antenna (200, 600, 700);
- reinforcing rods (210, 610) arranged in a star shape around an axial central element (240, 640, 740);
- means for maintaining tension (260, 660) connecting the free ends (211, 611) of said reinforcing rods (210, 610) to the periphery of the antenna (200, 600, 700), so as to bend said rods (210, 610) in the direction of the axis of the axial central element (240, 640, 740) in order to form a reinforcement in the general shape of a dome;
- transducer supports (220, 420, 421, 620), arranged around the axial central element (240, 640, 740), in a plane orthogonal to the axis (250, 650, 750) of the central element (240, 640, 740), said supports (220, 620) being preferably under stress,

the assembly of the reinforcing rods (210, 610), the means for maintaining tension (260, 660), and the axial central element (240, 640, 740) forming a rigid three-dimensional structure under stress, in which the reinforcing rods (210, 420, 421, 610), the means for maintaining tension (260, 660) and the transducer supports (220, 620) are preferably demountable.

**2.** Acoustic antenna for acoustic imaging, comprising an antenna according to claim 1, in which the transducers (230, 430, 431, 630) are microphones.

**3.** Antenna according to one of claims 1 or 2, in which the means for maintaining tension (260, 660) comprise tensioned cables between the free ends of the reinforcing rods (210, 610) at the periphery of the rigid three-dimensional structure.

**4.** Antenna according to one of the preceding claims, comprising moreover tensioning means (270, 670) which may or may not be the means for maintaining tension (260, 660).

5. Antenna according to one of the preceding claims, in which each of said transducer supports (220, 420) comprises a double strand formed by parallel tubes spaced apart, on which the transducers (230, 430) are fixed, each transducer support (220) comprising an inner end fixed to the axial central element (240, 740), and an outer end fixed to the free end (211) of one of said reinforcing rods (210), such that said transducer supports (220) are bent in the same direction in the plane orthogonal to the axis (250, 750) of the central element (240, 540, 740).

6. Antenna according to claim 5, in which the transducer supports (220, 420) form sections of a spiral and have a density of transducers (230, 430) that increases from the centre to the periphery of the antenna (200, 700).

7. Antenna according to one of claims 1 to 4, in which each of said transducer supports (421, 620) comprises a double strand formed by parallel cables spaced apart on which the transducers (431, 630) are fixed, each transducer support (421, 620) being tensioned between the central element (540, 640, 740) and the tensioning means (660) or the free end (611) of one of said reinforcing rods (610) at the periphery of the rigid three-dimensional structure.

8. Antenna according to one of the preceding claims, in which the tension applied to the means for maintaining tension (260, 660) is such that the deformation at the free ends of the reinforcing rods (210, 610) does not exceed approximately 3 cm +/- 10%, the deformation being estimated from the measurement of the vertical displacement of the ends (211, 611) of the reinforcing rods (210, 610) under the effect of the weight of the antenna (200, 600, 700) in the operating position.

9. Antenna according to one of the preceding claims, in which the reinforcing rods (210, 610) comprise a material having a density of less than 3 g/cm$^3$, such as carbon fibre.

10. Antenna according to one of the preceding claims, the span of which is equal to or greater than approximately 5 metres.

11. Device comprising an antenna according to one of the preceding claims and a stand (720) for holding said antenna (200, 600, 700) in an operating position, said stand (720) comprising at least a telescopic leg (721) for the height adjustment of the antenna (200, 600, 700), said telescopic leg (721) comprising at its end an element for attaching the antenna (200, 600, 700) allowing said antenna (200, 600, 700) to be pivoted from an assembly position to an operating position.

12. Method for the assembly of an antenna (200, 600, 700) according to claim 1, comprising:

- fixing the reinforcing rods (210, 610) to the axial central element (240, 640, 740);
- bending the reinforcing rods (210, 610) along the axis of the axial central element (240, 640, 740), by tensioning means (270, 670) connecting the free ends (211, 611) of the reinforcing rods (210, 610) to the periphery of the antenna (200, 600, 700), so as to form a dome;
- installing means for maintaining tension (260, 660) between the free ends (211, 611) of the reinforcing rods (210, 610) at the periphery of the antenna (200, 600, 700),

so as to form a rigid three-dimensional structure;

- and fixing transducer supports (220, 420, 421, 620) to the axial central element (240, 640, 740) and to the free end (211, 611) of the reinforcing rods (210, 610) or to the means for maintaining tension (260, 660) at the periphery of the antenna (200, 600, 700), said fixing of the supports (220, 420, 421, 620) preferably comprising their tensioning.

**FIG. 1A**
(ART ANTÉRIEUR)

**FIG. 1B**
(ART ANTÉRIEUR)

**FIG. 2A**

FIG. 2B

220

200

Y

X

Z

240

210

211

212

230

270

260

211

200

212

210

230

220

FIG. 2C

240 250

241

242

260

270

Y

Z

X

FIG. 3

FIG. 4A

FIG. 4B

FIG. 5A

FIG. 5B

FIG. 5C

FIG. 6

FIG. 7A

700

750

720

721

722

Y

X

Z

FIG. 7B

700

750

740

721

720

722

Y

X

Z

**EP 2 584 326 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 202008002958 U1